# EUROPÄISCHE PATENTSCHRIFT

(11) **EP 2 205 654 B1**
(45) Veröffentlichungstag und Bekanntmachung des Hinweises auf die Patenterteilung: **17.08.2011**
(21) Anmeldenummer: 08841546.8
(22) Anmeldetag: 22.10.2008
(51) Int. Cl.: C08G 18/08, C08G 18/10, C08G 18/20, C08J 5/24, B32B 27/40

(54) **POLYURETHAN-LAMINIERHARZ, LAMINAT, ENTHALTEND DAS POLYURETHANLAMINIERHARZ UND SKIER ODER SNOWBOARDS, ENTHALTEND DAS LAMINAT**
POLYURETHANE LAMINATION RESIN, LAMINATE CONTAINING THE POLYURETHANE LAMINATION RESIN, AND SKIS OR SNOWBOARDS CONTAINING THE LAMINATE
RÉSINE POLYURÉTHANE DE STRATIFICATION, STRATIFIÉ CONTENANT LA RÉSINE POLYURÉTHANE DE STRATIFICATION ET SKIS OU SNOWBOARDS CONTENANT LE STRATIFIÉ

(30) Priorität: 26.10.2007 EP 07119420
(43) Veröffentlichungstag der Anmeldung: 14.07.2010
(73) Patentinhaber: BASF SE, 67056 Ludwigshafen (DE)
(72) Erfinder: REESE, Hans-Jürgen, 49401 Damme (DE); NEUHAUS, Bert, 46535 Dinslaken (DE); HOLL, Silvio, 49448 Hüde (DE); TÄNNY, Günter, 67583 Guntersblum (DE)
(86) Internationale Anmeldenummer: PCT/EP2008/064293
(87) Internationale Veröffentlichungsnummer: WO 2009/053394

(56) Entgegenhaltungen:
- JP-A- 4 135 578
- US-A1- 2005 222 290
- US-A1- 2005 244 653
- US-A1- 2007 098 997

## Beschreibung

Die vorliegende Erfindung betrifft ein Verfahren zur Herstellung eines Polyurethan-Laminierharzes, bei dem man a) ein Isocyanatprepolymer auf Basis von Diphenylmethandüsocyanat mit einem difunktionell gestarteten Polyether, b) Polyphenylenpolymethylenpolyisocyanat, c) trifunktionell gestartetes Polyetherpolyol mit einem mittleren Molekulargewicht von 350 bis 600 g/mol, d) einen thermoaktivierbaren, blockierten Katalysator, e) gegebenenfalls Kettenverlängerer und/oder Vernetzer, f) gegebenenfalls wasserabsorbierende Stoffe und g) gegebenenfalls sonstige Zusatzstoffe zu dem Polyurethan-Laminierharz vermischt. Weiter betrifft die vorliegende Erfindung ein Polyurethan-Laminierharz, erhältlich durch ein solches Verfahren und die Verwendung eines solchen Polyurethan-Laminierharzes zur Herstellung von Laminaten sowie Skier oder Snowboards, enthaltend einen solches Laminat.

Laminierharze auf Basis von Polyurethanen sind bekannt. So beschreibt JP 2002/003814 einen Zweikomponenten-Laminier-Klebstoff, der durch Umsetzen einer Polyolkomponente, enthaltend Polyetherpolyol, Titandioxyd und als Lösemittel Ethylacetat, mit einer Isocyanatkomponente, die in Ethylacetat gelöstes Polyisocyanat enthält. Nachteilig an einem Laminierharz nach JP 2002/003814 ist dessen Gehalt an Lösungsmittel einschließlich der sich daraus ergebenden Verarbeitungsnachteile und Umweltbelastung. JP 2001/302814 beschreibt eine Zweikomponenten-Polyurethan-Laminierharz für die Laminierung von Holzblöcken, das durch Vermischen von Polyetherpolyolgemischen, enthaltend propoxyliertes Ethylendiamin, propoxyliertes Isphenol und ethoxyliertes Trimethylolpropan sowie den niederviskosen Weichmacher Dioktyladipat mit einem Polyarylpolyisocyanat (PAPI) erhalten wird. Nachteilig an einem Laminierharz nach JP 2001/302814 ist dessen Weichmachergehalt zur Viskositätsreduktion und die Verwendung von Amin-Polyetherpolyol welches einen ungünstigen Einfluss auf das Viskositätsverhalten in der Verarbeitungsphase der Laminierung ausübt.

US 2005/0244653 beschreibt ein zweischichtiges Kunststofflaminat bestehend aus einer dekorativen Schicht aus styrolgehärteten ungesättigten Polyester und einer rückwärtigen Schicht aus einem Polyurethanharz, die Glasfasermatten als Verstärkungsmittel enthalten kann. Das Polyurethanharz wird erhalten, indem die Polyolkomponente, die im wesentlichen Zuckerpolyole enthält, mit einer aus Polyphenylenpolymethylenpolyisocyanat und modifizierten MDI bestehenden Isocyanatkomponente in Gegenwart zweier aminischer Katalysatoren, wobei einer thermoaktivierbar ist, umgesetzt. Das Harz nach US 2005/0244653 ist im Gegensatz zu den japanischen Patentschriften frei von Löse- und Verdünnungsmitteln aber dessen hohe Viskosität bereits nach dem Vermischen und die dadurch schlechte Benetzbarkeit der Verstärkungsmittel, sowie das ungenügende Aushärteverhalten des Harzes bei der Laminierung und die schlechten mechanischen Eigenschaften des erhaltenen Laminats, sind entscheidende Nachteile.

US 2007098997 offenbart ein barrier coating aus einem Isocyanatsemiprepolymer aus diphenylmethandüsocyanat und Polypropylenglycol, polymerem MDI, trifunktionell gestartetem Polyetherol sowie einem nicht thermisch aktivierbaren Katalysator. Dieses Barrier Coating wird auf ein Polyurethan-Glasfaserlaminat aufgebracht.

Insbesondere zur Herstellung von Skiern oder Snowboards werden hohe Anforderungen an das Laminat gestellt. So muss eine hohe Härte gegeben sein, damit das Laminat den hergestellten Ski stabilisieren kann. Weiter ist eine hohe Festigkeit sowie er- - höhte Steifigkeit, eine hohe Zugfestigkeit und ein hoher Biege-E-Modul ohne Versprödung, insbesondere bei Kälte erforderlich. Darüber hinaus sollte das gewünschte Laminierharz eine lange Topfzeit und eine geringe Viskosität aufweisen, damit die Fasern bei der Herstellung des Laminats von der Reaktionsmischung möglichst optimal durchdrungen und mit dem Laminierharz benetzt werden. Das anschließende Aushärten sollte aber möglichst rasch erfolgen, damit die Herstellung des Laminats möglichst schnell erfolgen kann, wodurch Kosten gespart werden.

Aufgabe der vorliegenden Erfindung war es daher, ein Laminierharz zu liefern, das lange verarbeitbar ist und eine geringe Viskosität nach dem Vermischen aufweist sowie nach Anspringen der Reaktion schnell aushärtet. Weiter war es Aufgabe der Erfindung, ein hartes, kälteflexibles Laminat mit einer hohen Festigkeit sowie erhöhten Steifigkeit, einer hohen Zugfestigkeit und einem hohen Biege-E-Modul ohne Versprödung, insbesondere bei Kälte zu liefern.

Die erfindungsgemäße Aufgabe wird gelöst durch ein Polyurethan-Laminierharz, erhältlich durch Vermischen von a) Isocyanatprepolymer auf Basis von Diphenylmethandiisocyanat mit einem difunktionell gestarteten Polyether, b) Polyphenylenpolymethylenpolyisocyanat, c) trifunktionell gestartetem Polyetherpolyol mit einem mittleren Molekulargewicht von 350 bis 600 g/mol, d) thermoaktivierbarem, blockierten Katalysator, e) gegebenenfalls Kettenverlängerer und/oder Vernetzer, f) gegebenenfalls wasserabsorbierenden Stoffen und g) gegebenenfalls sonstigen Zusatzstoffen zu dem Polyurethan-Laminierharz.

Im Rahmen der vorliegenden Erfindung wird unter einem Laminierharz ein Harz verstanden, dass sich zur Herstellung von Laminaten eignet. Dazu werden im allgemeinen Verstärkungsmedien, beispielsweise auf Basis von Fasern oder Fasermatten, mit dem flüssigen Laminierharz getränkt und das Laminierharz wird ausgehärtet. Vorzugsweise

ist die Viskosität bei Raumtemperatur eine Minute nach Herstellung des Harzes kleiner als 1000 mPas, besonders bevorzugt kleiner als 500 mPas

Das Isocyanatprepolymer a) aus monomerem Diphenylmethandiisocyanat und Polypropylenglycol ist erhältlich, indem monomeres Diphenylmethandiisocyanat, vorzugsweise 4,4'-Diphenylmethandiisocyanat, beispielsweise bei Temperaturen von 30 bis 100 °C, bevorzugt bei etwa 80 °C, mit Polypropylenglycol zum Prepolymer umgesetzt wird. Dabei wird vorzugsweise Polypropylenglycol, erhältlich beispielsweise durch KOH- oder DMC-Katalyse, mit einem Molekulargewicht von 350 bis 600 g/mol eingesetzt. Als Startersubstanz wird dabei vorzugsweise Propylenglycol oder Wasser verwendet. Der Isocyanatgehalt des Prepolymers beträgt dabei vorzugsweise 19 bis 31 Gew.-% NCO.

Als Polyphenylenpolymethylenpolyisocyanat b) wird vorzugsweise Polyphenylenpolymethylenpolyisocyanat (auch als PMDI bezeichnet) mit einer Viskosität bei 25 °C von kleiner 600 mPas, bevorzugt von 100 bis 400 mPas und insbesondere von 150 bis 300 mPas eingesetzt. Vorzugsweise enthält ein erfindungsgemäßes PMDI 36 bis 50 Gew.-%-2-Kern-Verbindungen (Methylendiphenylendüsocyanat), 20 bis 28 Gew.-% 3-Kern-Verbindungen, 6-14 Gew.-% 4-Kern-Verbindungen, 2 bis 8 Gew.-% 5-Kern-Verbindungen und 12 bis 28 Gew.-% 6-Kern und höherkernige Verbindungen

Das Verhältnis von Isocyanatprepolymer a) und Polyphenylenpolymethylenpolyisocyanat b) beträgt vorzugsweise 0,9 : 1 bis 1,5 : 1, vorzugsweise 1,05 : 1 bis 1,35 : 1, jeweils bezogen auf das Gewicht der Komponenten a) und b).

Als trifunktionell gestartetes Polyetherol c) mit einem zahlenmittleren Molekulargewicht von 350 bis 600 g/mol können zur Polyurethanherstellung bekannte Polyetherole eingesetzt werden. Die Polyetherole werden nach bekannten Verfahren, beispielsweise durch anionische Polymerisation von Alkylenoxiden unter Zusatz mindestens eines Startermoleküls, das 3 reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallzyanidverbindungen, so genannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,3-Propylenoxid, 1,2- bzw. 2,3-Butylenoxid, jeweils alleine oder in Form von Mischungen, und vorzugsweise Ethylenoxid und/oder 1,2-Propylenoxid eingesetzt. Besonders bevorzugt enthalten erfindungsgemäße trifunktionell gestartete Polyetherole sekundäre OH-Gruppen. Diese werden beispielsweise durch endständige Propylenoxidgruppen erhalten. Insbesondere wird als Alkylenoxid ausschließlich 1,2 Propylenoxid eingesetzt.

Als Startermoleküle kommen beispielsweise Glycerin, Trimethylolpropan, Ethanolamin, Diethanolamin, Triethanolamin sowie andere dreiwertige Alkohole oder Amine mit drei aktiven Wasserstoffatomen in Betracht.

Als thermoreaktiver, blockierter Katalysator d) kann jeder Katalysator eingesetzt werden, der bei Raumtemperatur wenig aktiv ist und bei erhöhten Temperaturen, vorzugsweise bei Temperaturen größer 50 °C, besonders bevorzugt größer 80 °C und insbesondre größer 100 °C aktiver wird. Neben dem thermoreaktiven Katalysator werden dabei vorzugsweise keine weiteren Katalysatoren eingesetzt. Vorzugsweise werden als blockierte Katalysatoren eingesetzt, die mit Substanzen blockiert sind, die gegenüber den Katalysatoren als Protonendonatoren fungieren. Dabei handelt es sich beispielsweise bei den Aminkatalysatoren um Bis-2-Dimethylaminoethylether, N,N,N,N,N-Pentamethyldiethylentriamin, N,N,N-Triethylaminoethoxyethanol, Dimethylcyclohexylamin, Dimethylbenzylamin, Triethylamin, Triethylendiamin, Pentamethyldipropylentriamin, Dimethylethanolamin, N-Methylimidazol, N-Ethylimidazol, Tetramethylhexamethylendiamin, tris-Dimethylaminopropylhexahydrotriazin, Dimethylaminopropylamin, N-Ethylmorpholin, Diazabicycloundecen und Diazabicyclononen sowie Mischungen davon, wobei zyklische und insbesondere bicyclische Aminkatalysatoren bevorzugt sind. Als Protonendonatoren werden vorzugsweise Carbonsäuren oder Phenole und aromatische Alkohole eingesetzt. Besonders bevorzugt werden als Protonendonatoren aromatische Alkohole eingesetzt. Dabei beträgt das Molverhältnis von als Protonendonator wirkende Gruppen im Protonendonator zu protonierbaren Amingruppen im Aminkatalysator vorzugsweise 0,9 : 1 bis 1,1 : 1, insbesondere 1 : 1. Besonders bevorzugt wird dabei als blockierter Aminkatalysator mit Phenol blockiertes 1,8-Diaza-bicyclo(5,4,0)undec-7-en eingesetzt.

Der Anteil des thermoreaktiven, blockierten Katalysators d) beträgt dabei vorzugsweise 0,05 bis 10 Gew.-%, besonders bevorzugt 0,1 bis 5 Gew.-% und insbesondere 0,5 bis 2 Gew.-%, bezogen auf das Gesamtgewicht der Komponenten c) bis g).

Als Kettenverlängerer und/oder Vernetzer e) können Verbindung mit gegenüber Isocyanaten reaktiven Gruppen und einem Molekulargewicht von kleiner 300 g/mol eingesetzt werden. Beispielsweise kommen als Kettenverlängerungs- und/oder Vernetzungsmittel zwei- oder dreifunktionelle Amine und Alkohole, insbesondere Diole, Triole oder beide, jeweils mit Molekulargewichten kleiner als 300, vorzugsweise von 60 bis 150, zum Einsatz, wobei Kettenverlängerer 2 gegenüber Isocyanaten reaktive Wasserstoffatome und Vernetzungsmittel 3 gegenüber Isocyanat reaktive Wasserstoffatome aufweisen. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt wird als Kettenverlängerer und/oder Vernetzer e) Glycerin eingesetzt.

Sofern Kettenverlängerungsmittel, Vernetzungsmittel oder Mischungen davon Anwendung finden, kommen diese zweckmäßigerweise in Mengen von 0,1 bis 40 Gew.-%, vorzugsweise 0,5 bis 10 Gew.-% und insbesondere 1,0 bis 5 Gew.-%, bezogen auf das Gewicht der Komponenten c) und d) und e), zum Einsatz.

Als Additive zur Wasseradsorption f) werden vorzugsweise Aluminosilikate, ausgewählt aus der Gruppe der Natriumaluminosilikate, Kaliumaluminosilikate Calciumaluminosilikate Cäsiumaluminosilikate, Bariumaluminosilikate, Magnesiumaluminasilikate Strontiumaluminasilikate Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet.

Vorzugsweise hat das Additivs zur Wasserabsorption f) eine zahlengemittelte Partikelgröße von nicht größer als 200 µm, besonders bevorzugt nicht größer als 150 µm und insbesondere nicht größer als 100 µm. Vorzugsweise beträgt die Porenweite des erfindungsgemäßen Additivs zur Wasserabsorption 2 bis 5 Ångstroem.

Wenn ein Additiv zur Wasserabsorption f) zugegeben wird, geschieht dies vorzugsweise in Mengen größer einem Gewichtsteil, besonders bevorzugt im Bereich von 0,5 bis 5 Gewichtsteilen, bezogen auf das Gesamtgewicht der Komponenten c), d) und f) sowie gegebenenfalls e) und g).

Als sonstige Zusatzstoffe g) können alle in der Polyurethanchemie bekannten Zusatzstoffe eingesetzt werden. Vorzugsweise werden Zusatzstoffe g) eingesetzt, welche die Viskosität der Reaktionsmischung nicht stark erhöhen. Beispielsweise können flüssige Additive, wie Entschäumer, Entlüfter, UV-Stabilisatoren oder Thermostabilisatoren eingesetzt werden. Solche Zusatzstoffe sind bekannt und beispielsweise im "Kunststoffhandbuch, Band 7, Polyurethane", Carl Hanser Verlag, 3. Auflage 1993, Kapitel 3.4 beschrieben.

Zur Herstellung des erfindungsgemäßen Polyurethan-Laminierharzes werden die oben beschriebenen Komponenten a) bis d) und gegebenenfalls e), f) und g) vorzugsweise in solchen Mengenverhältnissen miteinender vermischt, dass der Isocyanatindex im Bereich von 85 bis 145, besonders bevorzugt im Bereich von 105 bis 125 liegt. Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Bevorzugt wird dabei im Zweikomponentenverfahren gearbeitet. Dazu werden die Komponenten c) und d), sowie gegebenenfalls e), f) und g) zu einer Polyolkomponente A) und die Komponenten a) und b) zu einer Isocyanatkomponente B) vermischt. Zur Herstellung des erfindungsgemäßen Polyurethan-Laminierharzes werden dann die Polyolkomponente A) und die Isocyanatkomponente B) vermischt.

Zur Herstellung von Laminaten wird das erfindungsgemäße Polyurethan-Laminierharz auf ein Verstärkungsmittel aufgetragen. Als Verstärkungsmittel können alle Materialien eingesetzt werden, die dem erfindungsgemäßen Polyurethan-Laminierharz eine noch höhere mechanische Stabilität verleihen. Solche Verstärkungsmittel sind beispielsweise Glasfasern, Glasfasermatten oder Kohlefasermatten, bevorzugt Glasfasermatten. Die Temperatur des Harzes liegt dabei im Bereich von 25 bis 35 °C.

Insbesondere eignet sich das erfindungsgemäße Polyurethan-Laminierharz zur Herstellung von Skiern und Snowboards. Dabei kann die Fertigung von Skiern wie folgt erfolgen. So kann das erfindungsgemäße Polyurethan-Laminierharz durch Vermischen der Polyolkomponente A) und der Isocyanatkomponente B) vorzugsweise im Hochdruckverfahren erhalten werden und auf den Obergurt des Skieinlegers, welcher vorzugsweise aus einer Glasfasermatte besteht, aufgetragen werden. Anschließend kann der getränkte Obergurt in ein geschlossenes Werkzeug eingebracht werden. Dabei beträgt die Werkzeugtemperatur vorzugsweise 60 bis 90 °C. In dieses geschlossene Werkzeug wird anschließend die Reaktionsmischung eines IHS System (Integral-Hartschaum) eingebracht und zusammen mit dem mit Laminierharz getränkten Obergurt ausgehärtet. Dabei ist es mit dem erfindungsgemäßen Polyurethan-Laminierharz möglich, die Härtung des Polyurethan-Laminierharzes und die Härtung des Polyurethan-Hartschaums parallel ablaufen zu lassen. Dies führt dazu, dass ein Ski mit verbesserten Gebrauchseigenschaften in Form besserer mechanischer Kennwerte wie Steifigkeit und Biege-E-Modul, erhalten wird. Dies ist insbesondere für höherwertige Ski, beispielsweise im Profi-Bereich, von Vorteil.

Die Fertigung von Snowboards unter Verwendung des erfindungsgemäßen Polyurethan-Laminierharzes kann beispielsweise wie folgt erfolgen. So kann zur Fertigung von Snowboards das erfindungsgemäße Polyurethan-Laminierharz durch Vermischen der Polyolkomponente A) und der Isocyanatkomponente B) vorzugsweise im Niederdruckverfahren erhalten werden und auf die Bestandteile des Snowboards, meist ein Untergurt, Holzeinleger, Glasfasermatte und ein Obergurt aufgebracht werden. Als Unter- bzw. Obergurt wird bei Snowboards vorzugsweise eine Kombination aus Polyethylen-Gurt-Lauffläche und Glasmatte eingesetzt. Die so mit Laminierharz durchtränkten Bestandteile des Snowboards werden dann in der Snowboardform zusammengefügt und anschließend im geschlossenen Werkzeug verpresst.

Das erfindungsgemäße Polyurethan-Laminierharz zeichnet sich durch eine hervorragende Verarbeitbarkeit, insbesondere aufgrund seiner geringen Viskosität und langen Verarbeitbarkeit aus. So lassen sich Verstärkungsmittel optimal mit den Polyurethan-Laminierharz benetzen. Darüber hinaus reagiert das Harz anfänglich langsam aber nach Beginn der Reaktion schnell aus. Weiter weisen die erfindungsgemäßen Laminate hervorragende mechanische Eigenschaften auf. So zeigen diese eine hervorragende Festigkeit sowie erhöhte Steifigkeit und einen hohen Biege-E-Modul ohne Versprödung und dies insbesondere bei Kälte.

Die Erfindung soll anhand nachfolgender Ausführungsbeispiele näher erläutert werden.

### Beispiel 1

Fertigung der Polyolkomponente A):
Aus 92kg eines Polyethertriols auf Basis Glyzerin/Propylenoxyd mit einem Molekulargewicht von 420g/mol, 2kg Glyzerin, 5kg eines Natriumalumosilikats mit Zeolithstruktur 50%ig in Rizinusöl sowie 1 kg des phenol blockierten 1,8-Diaza-bicyclo-[5,4,0]-7-undecen (DBU) wurde eine Polyolkomponente hergestellt.
Die so erhaltene Polyolkomponente weist eine Viskosität bei 25°C von 460 mPas auf.

Fertigung der Isocyanatkomponente B):
Aus 42,1 kg 4,4'-Diphenylmethandiisocyanat und 8,3 kg eines Polypropylenglykol mit einem Molekulargewicht von 450 g/mol wurde durch Umsetzung bei ca. 80°C ein Semiprepolymer hergestellt. Nach Ablauf der Prepolymerreaktion wurden dem Reaktionsprodukt 49,6 kg eines Polyphenylenpolymethylenpolyisocyanat (Handelsname:
   Lupranat® M 20 W der Firma Elastogran) zugemischt.
   Die so erhaltene Isocyanatkomponente weist eine Viskosität bei 25°C von 170 mPas auf.

Verarbeitung zum Laminierharz:
Die oben beschriebenen Komponenten werden maschinell im Mischungsverhältnis A : B, bezogen auf das Gewicht der Komponenten, von 100 : 115 zum Laminierharz verarbeitet.

Das erhaltene Polyurethan-Laminierharz weist bei 25 °C eine Ausgangsviskosität von ca. 300 mPas und Topfzeit von ca. 350 Sekunden bei einer Reaktionszeit von ca. 20 Sekunden auf. Dabei sind von der Topfzeit ca. 340 Sekunden als Laminierzeit nutzbar. Die mechanischen Eigenschaften des ausgehärteten Laminierharzes sind in Tabelle 1 angegeben.

### Vergleichsbeispiel 1

(analog US 2005/0244653):
Fertigung der Polyolkomponente (A):
   Aus 96,3kg eines Polyetherpolyols auf Basis Saccharose/Diethylenglykol/ Propylenoxyd/Ethylenoxyd Molekulargewicht 620 (Funktionalität 4,5), 100g 1-Methyl-Imidazol, 80g 1,8-Diaza-bicyclo-[5,4,0]-7-undecen in thermoaktivierbarer Form, 1 kg Diethyltoluylendiamin, 2kg eines Natriumalumosilikats mit Zeolithstruktur und 300g SiliconEntschäumer (Antifoam® MSA , Firma DOW Corning) wurde durch Vermischen eine Polyolkomponente hergestellt.
   Die so erhaltene Polyolkomponente weist eine Viskosität bei 25°C von 3300 mPas auf.

Fertigung der Isocyanatkomponente (B):
Aus 30kg eines Polyphenylenpolymethylenpolyisocyanat (Lupranat® M20) und 70kg eines modifizierten MDI (Lupranat® MP102) wird ein Isocyanatgemisch hergestellt.
Die so erhaltene Isocyanatkomponente weist eine Viskosität bei 25°C von 570 mPas auf.

Verarbeitung zum Laminierharz:
Die oben beschriebenen Komponenten werden maschinell im Mischungsverhältnis A : B, bezogen auf das Gewicht der Komponenten, von 100 : 115 zum Laminierharz verarbeitet.

Das erhaltene Polyurethan-Laminierharz weist bei 25 °C eine Ausgangsviskosität von ca. 1300 mPas und Topfzeit von ca. 200 Sekunden bei einer Reaktionszeit von ca. 70 Sekunden auf. Dabei sind von der Topfzeit ca. 125 Sekunden als Laminierzeit nutzbar. Die mechanischen Eigenschaften des ausgehärteten Laminierharzes sind in Tabelle 1 angegeben.

**Systemvergleiche (mechanische Eigenschaften - Tabelle 1):**

| | | Beispiel 1 | Vergleichsbeispiel 1 |
|---|---|---|---|
| Härte | [°Shore D] | 84 | 83 |
| Zugfestigkeit | [N/mm²] | 61,4 | 56,5 |
| Bruchdehnung | [%] | 5 | 2 |

### Beispiel 2 :

Eine zugeschnittene Glasmatte "Typ Pentax" der Firma Saertex wird in eine durch Klappverschluss verschließbare Form mit 2 mm Innenhöhe eingelegt. Das Laminierharz gemäß Ausführungsbeispiel 1 wird in der Menge eingetragen, dass es nach Durchtränkung der Glasfasermatte die Form vollständig füllt. Anschließend wird das Laminat bei 80 °C gehärtet. Die mechanischen Eigenschaften des gehärteten Materials sind in Tabelle 2 angegeben.

### Vergleichsbeispiel 2:

Eine zugeschnittene Glasmatte "Typ Pentax" der Firma Saertex wird in eine durch Klappverschluss verschließbare Form mit 2mm Innenhöhe eingelegt. Das Laminierharz gemäß Vergleichsbeispiel 1 wird in der Menge eingetragen, dass es nach Durchtränkung der Glasfasermatte die Form vollständig füllt. Anschließend wird das Laminat bei 80 °C gehärtet. Die mechanischen Eigenschaften des gehärteten Materials sind in Tabelle 2 angegeben.

**Vergleich der Laminate - Prüfrichtung längs der Faser (Tabelle 2)**

| Kennwert | Prüfnorm | Beispiel 2 | Vergleichsbeispiel 2 |
|---|---|---|---|
| Dichte | DIN EN ISO 845 | 1491 kg/m³ | 1456 kg/m³ |
| Glasgehalt | DIN EN ISO 1172 | 43 % | 43% |
| Härte | DIN 53505 | 84° Shore D | 83° Shore D |
| Biegefestigkeit | DIN EN ISO 178 | 379 N/mm² | 161 N/mm² |
| Biege-E-Modul | DIN EN ISO 178 | 5472 N/mm² | 2463 N/mm² |
| Zugfestigkeit | DIN EN ISO 527 | 191 N/mm² | 149 N/mm² |
| Zug-E-Modul | DIN EN ISO 527 | 15702 N/mm² | 6016 N/mm² |

## Patentansprüche

1. Verfahren zur Herstellung eines Polyurethan-Laminierharzes, bei dem man
a) ein Isocyanatprepolymer auf Basis von Diphenylmethandiisocyanat und ei- nem difunktionell gestarteten Polyether mit
b) Polyphenylenpolymethylenpolyisocyanat
c) trifunktionell gestartetes Polyetherol mit einem mittleren Molekulargewicht von 350 bis 600 g/mol
d) thermoaktivierbaren blockierten Katalysator
e) gegebenenfalls Kettenverlängerer und/oder Vernetzer,
f) gegebenenfalls wasserabsorbierende Stoffe und
g) gegebenenfalls sonstige Zusatzstoffe
zu dem Polyurethan-Laminierharz vermischt.

2. Verfahren nach Anspruch 1, **dadurch gekennzeichnet, dass** man eine Polyolkomponente A), enthaltend die Komponenten c), d) und gegebenenfalls e), f) und g) mit einer Polyisocyanatkomponente B), enthaltend die Komponenten a) und b), zu dem Polyurethan-Laminierharz vermischt.

3. Verfahren nach Anspruch 1 oder 2, **dadurch gekennzeichnet, dass** der thermoaktivierbare blockierte Katalysator d) ein blockierter Katalysator auf Basis von 1,8-Diaza-bicyclo-[5,4,0]-undec-7-en ist.

4. Verfahren nach Anspruch 3, **dadurch gekennzeichnet, dass** 1,8-Diaza-bicyclo-[5,4,0]-undec-7-en mit Phenol im Molverhältnis 0,9 : 1 bis 1,1 : 1, vorzugsweise 1 : 1, blockiert ist.

5. Verfahren nach einem der Ansprüche 1 bis 4, **dadurch gekennzeichnet, dass** als Vernetzer e) Glycerin mit einem Gewichtsanteil von 1 bis 5 Gew.-%, bezogen auf das Gesamtgewicht der Polyolkomponente A, enthalten sind.

6. Verfahren nach einem der Ansprüche 1 bis 5, **dadurch gekennzeichnet, dass** wasserabsorbierende Stoffe f) mit einem Gewichtsanteil von 0,5 bis 5 Gew.-%, bezogen auf das Gesamtgewicht der Polyolkomponente A, enthalten sind.

7. Verfahren nach einem der Ansprüche 1 bis 6, **dadurch gekennzeichnet, dass** das Isocyanatprepolymer a) einen NCO-Gehalt von 19 bis 31 Gew.-% aufweist.

8. Verfahren nach einem der Ansprüche 1 bis 7, **dadurch gekennzeichnet, dass** das Isocyanatprepolymer a) erhältlich ist durch zur Reaktion bringen von monomerem 4,4'-Diphenylmethandiisocyanat und Polypropylenglycol mit einem Molekulargewicht von 350 bis 600 g/mol.

9. Verfahren nach einem der Ansprüche 1 bis 8, **dadurch gekennzeichnet, dass** das Gewichtsverhältnis von a) Isocyanatprepolymer und b) Polyphenylenpolymethylenpolyisocyanat 0,9 : 1 bis 1,5 : 1 beträgt.

10. Verfahren nach einem der Ansprüche 1 bis 9, **dadurch gekennzeichnet, dass** der Isocyanatindex 85 bis 145 beträgt.

11. Polyurethan-Laminierharz erhältlich durch ein Verfahren gemäß einem der Ansprüche 1 bis 10.

12. Verwendung eines Polyurethan-Laminierharzes nach Anspruch 11 zur Herstellung von Laminaten.

13. Ski oder Snowboard, enthaltend ein Laminat nach Anspruch 12.

## Claims

1. A process for producing a polyurethane lamination resin, by mixing
a) an isocyanate prepolymer based on diphenylmethane diisocyanate and on a difunctionally started polyether with
b) polyphenylene polymethylene polyisocyanate
c) trifunctionally started polyetherol with an average molar mass of from 350 to 600 g/mol
d) thermoactivatable capped catalyst
e) optionally chain extender and/or crosslinking agent,
f) optionally water-absorbent substances, and
g) optionally other additives
to give the polyurethane lamination resin.

2. The process according to claim 1, wherein a polyol component A), comprising components c), d), and optionally e), f), and g) is mixed with a polyisocyanate component B), comprising components a) and b), to give the polyurethane lamination resin.

3. The process according to claim 1 or 2, wherein the thermoactivatable capped catalyst d) is a capped catalyst based on 1,8-diazabicyclo[5.4.0]undec-7-ene.

4. The process according to claim 3, wherein 1,8-diazabicyclo[5.4.0]undec-7-ene has been capped with phenol in a molar ratio from 0.9:1 to 1.1:1, preferably 1:1.

5. The process according to any of claims 1 to 4,
wherein the crosslinking agent e) comprises glycerol in a proportion by weight of from 1 to 5% by weight, based on the total weight of the polyol component A.

6. The process according to any of claims 1 to 5,
wherein water-absorbent substances f) are comprised in a proportion by weight of from 0.5 to 5% by weight, based on the total weight of the polyol component A.

7. The process according to any of claims 1 to 6, wherein the NCO content of the isocyanate prepolymer a) is from 19 to 31% by weight.

8. The process according to any of claims 1 to 7, wherein the isocyanate prepolymer a) is obtainable via reaction of monomeric diphenylmethane 4,4'-diisocyanate and polypropylene glycol with a molar mass of from 350 to 600 g/mol.

9. The process according to any of claims 1 to 8, wherein the ratio by weight of a) isocyanate prepolymer and b) polyphenylene polymethylene polyisocyanate is from 0.9:1 to 1.5:1.

10. The process according to any of claims 1 to 9, wherein the isocyanate index is from 85 to 145.

11. A polyurethane lamination resin obtainable via a process according to any of claims 1 to 10.

12. The use of a polyurethane lamination resin according to claim 11 for producing laminates.

13. A ski or snowboard, comprising a laminate according to claim 12.

## Revendications

1. Procédé pour la préparation d'une résine de stratification de polyuréthane, dans lequel on mélange
a) un prépolymère d'isocyanate à base de diphénylméthanediisocyanate et d'un polyéther démarré difonctionnellement
b) un polyphénylène-polyméthylène-polyisocyanate
c) un polyétherol démarré trifonctionnellement présentant un poids moléculaire moyen de 350 à 600 g/mole
d) un catalyseur bloqué thermoactivable
e) le cas échéant des agents d'allongement de chaîne et/ou des réticulants,
f) le cas échéant des substances absorbant l'eau et
g) le cas échéant d'autres additifs,
en ladite résine de stratification de polyuréthane.

2. Procédé selon la revendication 1, **caractérisé en ce qu'**on mélange un composant polyol A), contenant les composants c), d) et le cas échéant e), f) et g) avec un composant polyisocyanate B), contenant les composants a) et b) en ladite résine de stratification de polyuréthane.

3. Procédé selon la revendication 1 ou 2, **caractérisé en ce que** le catalyseur bloqué thermoactivable d) est un catalyseur bloqué à base de 1,8-diazabicyclo-[5,4,0]-undéc-7-ène.

4. Procédé selon la revendication 3, **caractérisé en ce que** le 1,8-diazabicyclo-[5,4,0]-undéc-7-ène est bloqué avec du phénol dans un rapport molaire de 0,9:1 à 1,1:1, de préférence de 1:1.

5. Procédé selon l'une quelconque des revendications 1 à 4, **caractérisé en ce que** du glycérol représentant une proportion pondérale de 1 à 5% en poids, par rapport au poids total du composant polyol A, est contenu comme réticulant e).

6. Procédé selon l'une quelconque des revendications 1 à 5, **caractérisé en ce que** des substances absorbant l'eau f) représentant une proportion pondérale de 0,5 à 5% en poids, par rapport au poids total du composant polyol A, sont contenues.

7. Procédé selon l'une quelconque des revendications 1 à 6, **caractérisé en ce que** le prépolymère d'isocyanate a) présente une teneur en NCO de 19 à 31% en poids.

8. Procédé selon l'une quelconque des revendications 1 à 7, **caractérisé en ce que** le prépolymère d'isocyanate a) peut être obtenu par la mise en réaction de 4,4'-diphénylméthanediisocyanate monomère et de polypropylèneglycol présentant un poids moléculaire de 350 à 600 g/mole.

9. Procédé selon l'une quelconque des revendications 1 à 8, **caractérisé en ce que** le rapport pondéral de a) prépolymère d'isocyanate à b) polyphénylène-polyméthylène-polyisocyanate est de 0,9:1 à 1,5:1.

10. Procédé selon l'une quelconque des revendications 1 à 9, **caractérisé en ce que** l'indice isocyanate est de 85 à 145.

11. Résine de stratification de polyuréthane, pouvant être obtenue par un procédé selon l'une quelconque des revendications 1 à 10.

12. Utilisation d'une résine de stratification de polyuréthane selon la revendication 11 pour la préparation de stratifiés.

13. Ski ou snowboard, contenant un stratifié selon la revendication 12.
